Europäisches Patentamt

European Patent Office

Office européen des brevets

(11) Publication number: **0 090 843 B1**

**EUROPEAN PATENT SPECIFICATION**

(45) Date of publication of patent specification: **08.07.87**

(51) Int. Cl.⁴: **C 03 B 37/05**

(21) Application number: **82903388.5**

(22) Date of filing: **30.09.82**

(86) International application number:
**PCT/US82/01393**

(87) International publication number:
**WO 83/01422 28.04.83 Gazette 83/10**

(54) **ULTRAHIGH VELOCITY WATER COOLING.**

(30) Priority: **13.10.81 US 311042**
**13.10.81 US 311043**
**13.10.81 US 311045**

(43) Date of publication of application:
**12.10.83 Bulletin 83/41**

(45) Publication of the grant of the patent:
**08.07.87 Bulletin 87/28**

(84) Designated Contracting States:
**AT BE CH DE FR GB LI LU NL SE**

(56) References cited:
**FR-A-2 034 855**
**JP-B-48 008 363**
**SE-A- 85 432**
**US-A- 399 263**
**US-A-2 529 962**
**US-A-2 827 279**
**US-A-2 944 284**
**US-A-4 106 921**
**US-E- 25 306**

(73) Proprietor: **WOODING CORPORATION**
**Bear Pond, R.D.2**
**Indian Mills New Jersey 08088 (US)**

(72) Inventor: **WOODING, Patrick J.**
**Bear Pond, R.D.2**
**Indiana Mills New Jersey 08088 (US)**

(74) Representative: **Schmitz, Jean-Marie et al**
**OFFICE DENNEMEYER S.à.r.l. P.O. Box 1502**
**L-1015 Luxembourg (LU)**

Courier Press, Leamington Spa, England.

## Description

The present invention relates to a device utilized in a process for converting molten material into mineral wool fibers including a working surface which is contacted by said molten material, a coolant guide spaced from the nonworking surface of said device to form a passage between said guide and said nonworking surface, and liquid coolant supply means in communication with said passage for supplying coolant thereto, as defined in the precharacterising part of claim 1. Such a device is disclosed in US—A—2529962 and also in FR—A—2034855.

This invention is directed toward the production of mineral wool fibers for thermal insulation. More particularly, the invention provides a means for effectively cooling various elements of a mineral wool production system.

The US—A—2 529 962 describes a method and apparatus for producing mineral wool in utilizing a rotor construction for use in a spinning process of the production of mineral wool. The rotor construction is supported on a horizontal axis for rotation and molten material is continuously discharged onto the rotor surface. A cooling system is used for controlling the temperature of the rotor. The precharacterising parts of claims 14 and 17 are based on this disclosure.

In the production of mineral wool fibers, molten material from a furnace flows through a taphole into a trough and is directed onto the surface of a fiberizing spinner. Because of the extremely high heat generated by the molten material flowing through the taphole, it has been known for sometime that provisions must be made for cooling such tapholes. This has been conventionally accomplished by constructing the taphole from steel and water cooling the steel. However, this approach has been less than effective and results in an unpredictable, varying buildup or "skull", of solid material at the working surface of the cooled metal and a correspondingly uneven discharge of molten material. The precharacterising parts of claims 2 and 10 are based on the above prior art.

Troughs for delivery of molten material have been one of the banes of designers for years. Refractory construction is expensive and short-lived in air, builds up unpredictable accretions as the "system" attempts to reach thermal steady state and therefore corrupts an otherwise steady delivery into an unsteady, wavering flow. Essentially the same criticism applies to water-cooled metal troughs, particularly since these have invariably been made of carbon or stainless steel, cooled in a conventional manner. To date, no one has been able to produce a trough capable of providing a constant, unwavering flow of material from the discharge end thereof.

The FR—A—2 034 855 discloses a process and apparatus for providing glass parisons to a shaping device, such as a set of molds. In the described apparatus an inclined trough is used cooled with a cooling fluid passing through a chamber positioned in the walls of the trough. The precharacterising parts of claims 11 and 13 are based on this document.

The function of a fiberizing spinner is to impart kinetic energy to the stream of molten material so that high velocity air, steam or other vapor, impinging on the rapidly moving stream of molten material, can force that stream into a multiplicity of small diameter fibers of considerable length.

For the long fiber, low density mineral wool in general use in the United States for attic insulation, single wheel spinners have proved quite effective. For higher density fiber for cavity wall retrofit or industrial pipe covering, ceiling tiles, etc., it is more customary worldwise to use the so-called "four-wheel" spinner.

This four-wheeled spinner consists of 4 parallel, powered spindles each terminating in a water-cooled wheel of 25 to 35 cm (10 to 14 inches) in diameter with a 10 to 13 cm (4 to 5 inch) rim width, all 4 wheels being mounted in the same plane so that molten material dropping onto the top wheel is given velocity and slung onto the second wheel, and so on. Past the lowest, or third and fourth wheels, high velocity air or steam pushes the now highly energetic molten material laterally with such force that it separates into fibers.

These 4 spinner wheels have in the past been constructed of steel, conventionally water-cooled. As a result, the wheels are worn out by approximately one week's work and have to be refaced at considerable expense.

As explained more fully in Applicant's United States Patent US—A—4,032,705 (the entire subject matter thereof being included herein by reference), Applicant has discovered that the rapid, consistent removal of large quantities of energy in the range of 1600 kJ/m²/sec (1 BTU per square inch per second) through a water-cooled metal barrier, without damage to that barrier, requires that the metal have excellent thermal conductivity and a reasonably high melting point, and be force-cooled at a constant temperature by the creation and efficient removal of steam at its back face.

Converting 0.45 kg (1 pound) of water into steam requires 1020 kJ at 100°C (967 BTU's of heat at 212°F or 536 calories per gram at 100°C). If water can be made to present itself consistently to the area to be cooled and there to turn into steam, and then to leave the area immediately to make room for more water to arrive, a highly efficient and predictable cooling system results. The area to be cooled must, of course, be kept free of accretion to obviate the film effects which are adverse to efficient thermal transfer.

Experimentation has shown that the best way to remove the steam film as rapidly as it forms is by applying ultrahigh velocity cooling water to the back surface of the metal barrier. A cooling water velocity of at least 3 m/sec (10 feet per second) has proved to be required, and this velocity must be at the surface off the metal, not merely at the center of a substantial cooling passage of which the metal barrier is one of the walls. The preferred water cooling velocity is at least 6 m/sec (20 feet per second). It should be readily apparent that such velocities require high flow rates through small passages, thereby generating pressure drops of the order of 0.1 to 0.4 MPa (20 to 60 psi), depending on the surfaces, shapes and length of the area to be cooled.

To enhance the effectiveness of this cooling, a readily workable metal of reasonable cost and melting point and high thermal conductivity is required. From a table of the physical properties of the elements, a selection of an easily workable, relatively inexpensive material with a melting point about 1 000°C and good thermal transfer capability results in the following list:

| Element | Melting point °C | Conductivity J.g. cm/cm²/s/°C | cal.g. cm/cm²/s/°C |
|---|---|---|---|
| Chromium (Cr) | 1875 | 0.669 | (0.16) |
| Copper (Cu) | 1083 | 3.948 | (0.943) |
| Iron (Fe) | 1537 | 0.753 | (0.18) |
| Molybdenum (Mo) | 2610 | 1.423 | (0.34) |
| Nickel (Ni) | 1443 | 0.921 | (0.22) |
| Silver (Ag) | 960 | 4.186 | (1.00) (for comparison) |

Chromium, molybdenum and nickel are not really easily workable and they are relatively expensive. Furthermore, these materials have thermal conductivities which are from 3 to 5 times poorer than that of copper.

Because of the relatively low melting point of copper and the corresponding higher melting point of iron, the automatic and quite incorrect choice in the past for a water-cooled taphole, trough or spinner has been steel. This has been true even though it has a thermal transfer ability less than 1/5 that of copper. Furthermore, for a number of reasons, the water-cooled steel has a tendency to form films thereon of a highly insulating nature.

Compounding this technical felony is the fact that, to Applicant's knowledge, no attempt has been made to ensure the efficient removal of heat energy from the back face of a taphole orifice, a trough or a spinner by the encouragement of steam formation, against a clean surface, made effective by the immediate removal of that steam by new cooling water moving at "ultrahigh velocity". It should be pointed out that the use of stainless steel only makes matters worse since stainless steel grades have thermal transfer abilities 16 to 24 times poorer than copper.

The device specified above is, according to the present invention characterized by said working surface being comprised of copper and said coolant guide being closely spaced from the nonworking surface of said device so as to define a highly restrictive narrow flow passage whereby the velocity of the coolant will be accelerated to an ultrahigh velocity of at least 3 m/s (10 ft/s) across the surface of the passage walls as it passes through the passage.

The present invention overcomes the problems of the prior art and provides a taphole as defined in claim 2, a trough as defined in claim 11 and a spinner as defined in claim 14, which are protected from wear and which allow a film of solid material or "skull" of predictable, constant thickness to freeze on their working surface. The taphole, trough or spinner is comprised of a copper shell and includes a coolant guide having a surface which is closely spaced from the nonworking surface of the taphole, trough or spinner to form a highly restrictive, narrow flow passage therebetween. A liquid coolant is supplied to the passage where the velocity of the same is made to accelerate to an ultrahigh velocity of at least 3 m/s (10 feet per second) across the inner surface of the shell to thereby sweep away steam generated upon the surface.

The invention also provides methods for cooling a taphole, a trough and a spinner as defined in claims 10, 13 and 17.

For the purpose of illustrating the invention, there are shown in the accompanying drawings forms which are presently preferred; it being understood that the invention is not intended to be limited to the precise arrangements and instrumentalities shown.

Figure 1 is a cross-sectional view of an ultrahigh velocity water-cooled copper taphole constructed in accordance with the principles of the present invention;

Figure 2 is a lengthwise cross-sectional view of an ultrahigh velocity water-cooled copper trough;

Figure 3 is a cross-sectional view taken along the lines 3—3 of Figure 2, and

Figure 4 is a cross-sectional view of an ultrahigh velocity water-cooled copper spinner.

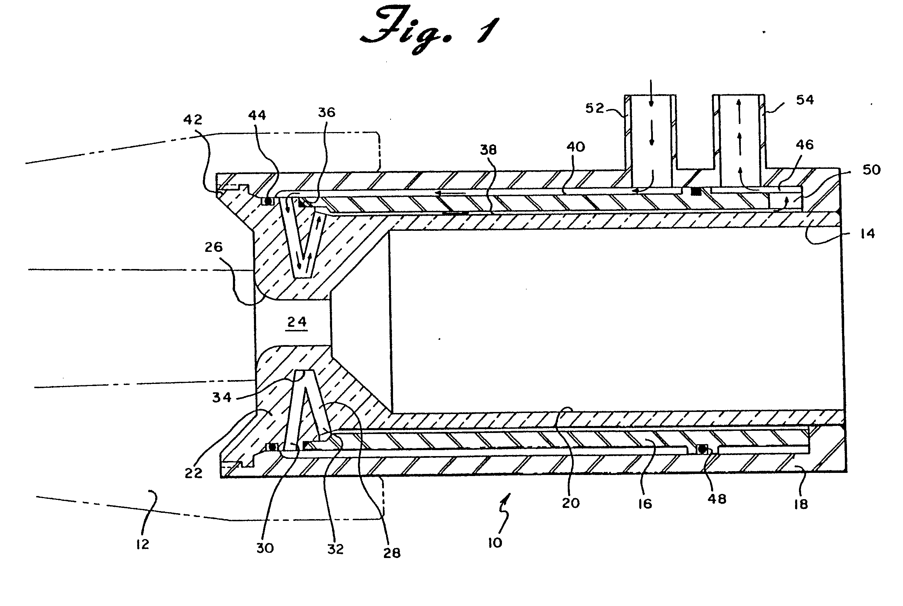

Referring now to the drawings in detail wherein like reference numerals designate like elements, there is shown in Figure 1 a longitudinal cross-sectional view of an ultrahigh velocity water-cooled copper taphole constructed in accordance with the principles of the present invention and designated generally as 10. The forward end of the taphole 10 (the left side as shown in the figure) is secured to a graphite nozzle 12 in a known manner. The nozzle 12 is not part of the present invention per se and is shown in phantom merely to show the environment of the present invention. The nozzle 12 is, in turn, fitted in the crucible wall of a melting furnace in a manner known to those skilled in the art.

The taphole 10 is comprised essentially of three major parts: an inner copper member 14, an intermediate coolant guide 16 and an outer jacket 18. Except for the forward portion of the copper member 14 which will be explained in more detail hereinafter, each of the elements 14, 16 and 18 is relatively thin-walled tubularly shaped and preferably cylindrically shaped, i.e. having a circular cross section. The inner copper member 14, coolant guide 16 and jacket 18 are also arranged to be coaxial with each other.

The inner surface 20 of the copper member 14 is the working surface of the taphole 10 and defines the opening through which molten material from a furnace passes (from left to right in the figure). The thickness of the wall of the copper member 14 is increased at the forward end thereof as shown at 22 so as to produce a reduced inner diameter portion defining an orifice 24. The orifice 24 includes an inner working surface 26 which is continuous with the inner working surface 20 of the copper member 14.

In order to effectively cool the working surface of the orifice in the manner described hereinabove, a plurality of holes are drilled into the thickened wall portion 22 to form a plurality of passageways such as shown at 28. Each passageway is formed by drilling a first hole 30 from the outer surface of the copper member 14 toward the working surface 26 of the orifice 24. A second hold 32 starting at a position which is axially offset from the first hole 30 is also drilled inwardly toward the working surface 26 of the orifice 24 so as to intersect the inner end of the first hole 30.

Each passageway 28 is, therefore, substantially V-shaped and includes wall surfaces 34 which lie behind the working surface 26 of the orifice. The surface 34 is in relatively close proximity to the working surface 26 but is isolated therefrom. Each of the holes 30 and 32 forming the passageways 28 is only approximately 0.4 cm (5/32 of an inch) thereby defining a highly restrictive narrow flow passage for a liquid coolant. It should be readily apparent that while only two such passageways 28 are shown in the figure, any desired number of such passageways may be utilized and are preferably equiangularly spaced around the axis of the orifice 24. In the preferred embodiment, twelve such passages are utilized.

As stated above, the coolant guide 16 is coaxially disposed around the copper member 14. The forward most end of the coolant guide 16 is welded or otherwise secured to the outer surface of the copper member 14 at a position 36 which is located between the openings 30 and 32. A narrow annular space 38 remains between the inner copper member 14 and the coolant guide 16 and extends substantially the entire length of the taphole 10. This space 38 forms a part of the highly restrictive narrow flow passage and is in communication with the passageways 28 through the holes 32.

An annular space 40 also remains between the coolant guide 16 and the outer jacket 18. This annular space 40 extends from a point near the forward end of the taphole 10 to a point adjacent the discharge end of the taphole but spaced therefrom. Adjacent the forward end of the taphole 10, the jacket 18 is secured to the copper member 14 such as shown at 42. An O-ring 44 provides a liquid seal between the two elements. The forward most end of the annular space 40 is in communication with the passageways 28 through the holes 30.

The annular space 46 between the coolant guide 16 and the jacket 18 at the rear of the taphole 10 is isolated from the major portion of the annular space 40 by an O-ring seal 48 located between the coolant guide 16 and jacket 18. The annular space 46 communicates with the annular space 38 through a plurality of openings 50 located in the rearward most end of the coolant guide 16. These openings 50 can be formed by either castellating the end of the coolant guide 16 or by drilling a plurality of holes therethrough. An inlet port 52 communicates with the annular space 40 and an outlet port 54 communicates with the annular space 46.

The taphole 10 functions in the following manner. Molten material such as molten slag, for example, flows from the furnace and nozzle 12 through the orifice 24 and thence along the working surface 20 of the copper member 14 until it is discharged from the discharge end of the taphole. As the molten material flows through the taphole, intense heat is transferred to the copper member 14. Water or other desired liquid coolant is forced into the inlet port 52, through the annular space 40 and thence into the passageways 28 through openings 30. The liquid coolant flows out of the passageways 28 through the openings 32 and through the annular space 38. At the rearward end of the taphole 10, the liquid coolant flows through the openings 50 into the annular space 56 and out the outlet port 54. Because of the highly restrictive narrow flow passage in the passageways 28 and in the annular space 38, in combination with the pressure of the incoming liquid coolant, the coolant is forced across the surfaces 34 and the outer surface of the copper member 14 at an ultrahigh velocity of at least 3 m/s (10 feet per second) to sweep away steam generated upon these surfaces, thereby effectively cooling the copper member 14.

As a result of the effective cooling provided by the present invention, a skin or "skull" of solid slag material of predictable, constant thickness freezes on the working surfaces 26 and 20 of the orifice and taphole so that the discharge of further molten material is smooth and consistent. Furthermore, this skull is thermally insulating thereby protecting the copper from excessive temperatures. The skull also protects the copper working surface from physical wear.

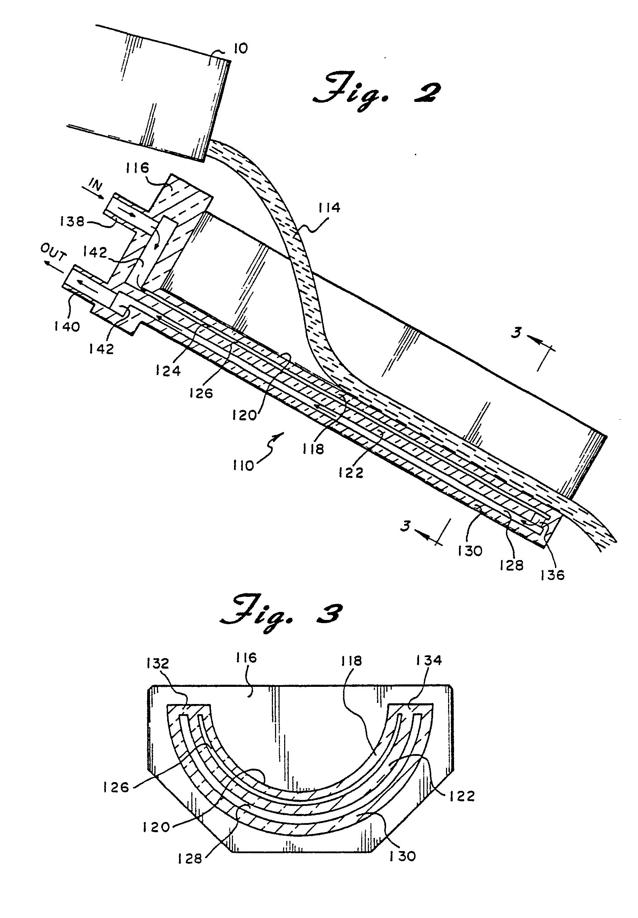

There is shown in Figure 2 a lengthwise cross-sectional view of an ultrahigh velocity water-cooled copper trough constructed in accordance with the principles of the present invention and designated as 110. Trough 110 is shown located beneath taphole 10 so that molten material such as molten slag 114 flowing from the taphole 10 may be guided along the upper surface of the trough to a spinning station or to any other desired location.

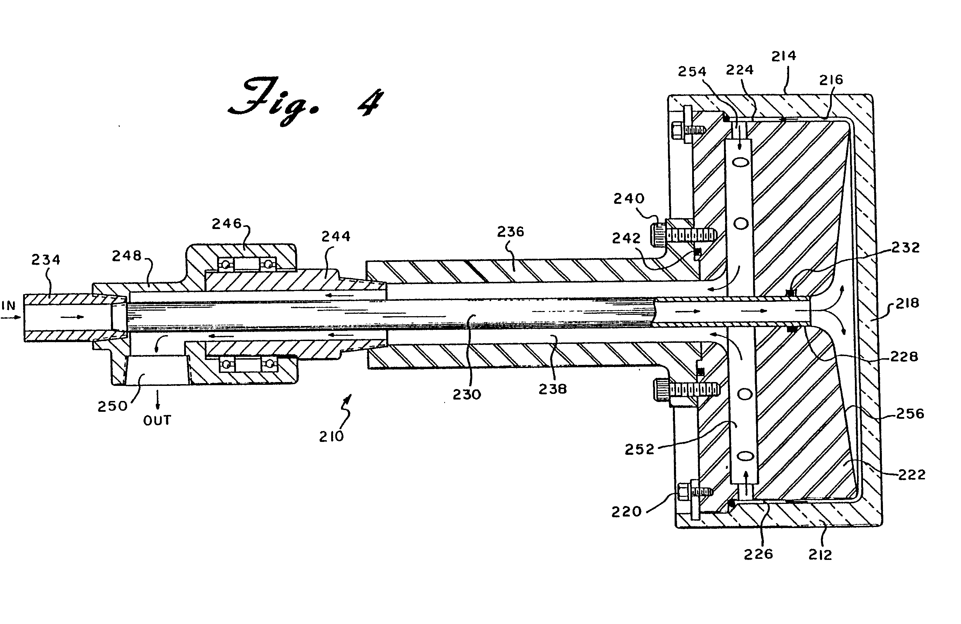

Except for the end wall 116, the entire trough 110 is substantially semicylindrically shaped as is shown most clearly in Figure 3. The trough is comprised of an elongated substantially semicylindrically shaped upper copper member 118 having an upper working surface 120 which supports the molten material 114. A complementary shaped coolant guide 122 is mounted below the lower surface 124 of the copper member 118 and is closely spaced therefrom defining a highly restrictive narrow flow passage 126. The flow passage 126 extends substantially the entire length of the trough 110.

Located beneath the coolant guide 122 and spaced therefrom so as to define a return path or space 128 is a lower jacket 130. The shape of the jacket 130 is substantially the same as the shape of the upper copper member 118 and the coolant guide 122. As shown most clearly in Figure 3, the extreme side edges of the members 118, 122 and 130 are sealed together such as shown at 132 and 134. A plurality of holes 136, however, are formed in the coolant guide adjacent the discharge end of the trough 110 (the right side as viewed in Figure 2) so as to provide communication between the passage 126 and the return path 128.

The end wall 116 of the trough 110 includes an inlet port 138 and an outlet port 140. Inlet port 138 is in communication with a channel 142 which extends substantially the width of the trough and which communicates with the passage 126. Similarly, the outlet port 140 is in communication with channel 142 which, in turn, communicates with the return path 128.

The trough 110 functions in the following manner. Molten material such as molten slag 114, for example, flows through taphole 10 onto the working surface 120 of the copper member 118 and thence to a spinner or the like. As the molten slag 114 flows along the surface 120, intense heat is transferred to the copper member 118. Water or other desired liquid coolant is forced into the inlet port 138, through the channel 142 and into the passage 126. From there, the liquid coolant passes through the openings 136 and back up through the return path 128 to channel 142 and out the outlet port 140. Because of the highly restrictive narrow flow passage 126 in combination with the pressure of the incoming liquid coolant, the coolant is forced across the undersurface 124 of the copper member 118 at an ultrahigh velocity of at least 3 m/s (10 feet per second) to sweep away steam generated upon this surface, thereby effectively cooling the copper member 118.

As a result of the effective cooling provided by the present invention, a skin or "skull" of solid slag material of predictable, constant thickness freezes on the working surface of the trough thereby permitting a constant, unwavering flow of material from the discharge end of the trough. Furthermore, this skull is thermally insulating thereby protecting the copper from excessive temperatures. The skull also protects the copper working surface from physical wear.

Figure 4 shows a cross-sectional view of an ultrahigh velocity water-cooled copper spinner designated generally as 210. Spinner 210 is comprised essentially of a substantially cylindrically shaped copper shell 212 having an outer working surface 214 upon which molten material such as molten slag 114 impinges to receive kinetic energy so that it may be formed into fibers. The copper shell 212 also includes an inner cylinder surface 216 and an end wall 218 which is integral with the cylindrically shaped portion 212.

Located within the shell 212 and securely fastened thereto through a plurality of bolts 220 is a coolant guide 222. Coolant guide 222 is substantially cylindrically shaped and has an outer cylindrical wall 224. The coolant guide 222 is coaxially arranged within the shell 212 with the surface 224 closely spaced from the inner surface 216 of the shell 212 so as to define a highly restrictive annularly shaped narrow flow passage 226.

Passing axially through the center opening 228 of the guide 222 is an inner conduit 230. The forward end of the conduit 230 is rotatably mounted with respect to the guide 222 but is provided with a liquid seal by the use of O-ring 232. The rearward end of the conduit 230 (the left side as viewed in Figure 4) terminates in a fixed inlet port 234.

An outer conduit 236 is coaxially disposed around the inner conduit 230 so as to define an annular space 238 therebetween which functions as a return path as will be explained more clearly hereinafter. The forward end of the conduit 236 is secured to the back face of the guide 222 through a plurality of bolts 240 and is sealed thereto by O-ring 242.

The other end of the outer conduit 236 is secured to a first part 244 of a rotating union 246. The other half 248 of the rotating union 246 which is the fixed half thereof is secured to the inner conduit 230 and the inlet port 234. The rotating union 246 is also provided with an outlet port 250 which, as can be seen, is in communication with the annular space or return path 238.

Located within the interior of the guide 222 and adjacent the rearward end thereof (the left side as shown in Figure 4) is a substantially disc-shaped cavity 252. This cavity 252 is in communication with the annular space or return path 238. The cavity 252 is also in communication with the narrow flow passage 226 through a plurality of holes 254 which pass radially through the guide 222 from the outer surface 224 thereof into the cavity 252. In the preferred embodiment, there are twelve such holes 254 which are equiangularly spaced around the circumference of the guide 222.

The front face 256 of the guide 222 is substantially dish-shaped. That is, the distance between the face 256 and the end wall 218 narrows as the radius increases. As should be recognized by those skilled in the art, this is done to provide constant flow velocity in the space between the surface 256 and the end wall 218. The spinner may be rotated in a conventional manner around its axis by a gear or pulley fixedly secured to the outer conduit 236.

The spinner 210 functions in the following manner. The combined shell 212, guide 222 and outer conduit 236 are rotated at the desired speed and molten material such as molten slag 114, for example, is made to impinge on the working surface 214 of the copper shell 212 to be formed into fibers. As the molten material contacts the surface 214, intense heat is transferred to the copper shell 212. Water or other desired liquid coolant is forced into the inlet port 234, through the conduit 230 and into the space between the face 256 of the guide 222 and the end wall 218. From there, the liquid coolant passes through the passage 226, through the openings 254 into the cavity 252 and through the return path 238 to the outlet port 250. Because of the highly restrictive narrow flow passage 226 in combination with the pressure of the incoming liquid coolant, the coolant is forced across the inner surface 216 of the copper shell 212 at an ultrahigh velocity of at least 3 m/s (10 feet per second) to sweep away steam generated upon this surface, thereby effectively cooling the copper shell 212.

As a result of the effective cooling provided by the present invention, a skin or "skull" of solid slag material of predictable, constant contour freezes on the working surface of the spinner thereby permitting closer control of the fiberization process. Furthermore, this skull is thermally insulating thereby protecting the copper from excessive temperatures. The skull also protects the copper working surface from physical wear.

It should be noted with respect to each of the above embodiments, that while some ports have been referred to as inlet ports and others as outlet ports, these can be reversed. The liquid coolant can be made to flow in the opposite direction entering the "outlet" ports and leaving the "inlet" ports with the same cooling effect. Furthermore, it should be pointed out that the coolant guides, conduits and jackets may also be made from copper or may be made from stainless steel or any other desired material.

**Claims**

1. A device (10, 110, 210) utilized in a process for converting molten material (114) into mineral wool fibers including a working surface (26, 120, 214) which is contacted by said molten material (114), a coolant guide (16, 122, 222) spaced from the nonworking surface (34, 124, 216) of said device to form a passage (28, 126, 226) between said guide and said non-working surface, and liquid coolant supply means (52, 138, 234) in communication with said passage for supplying coolant thereto characterized by said working surface being comprised of copper and said coolant guide (16, 122, 222) being closely spaced from the nonworking surface (34, 124, 216) of said device so as to define a highly restrictive narrow flow passage (28, 126, 226) whereby the velocity of the coolant will be accelerated to an ultrahigh velocity of at least 3 m/s (10 ft/s) across the surface of the passage walls as it passes through the passage.

2. A taphole (10) for a melting furnace comprising a metallic member (22) having an inner working surface (26) defining an orifice (24) through which molten material from a furnace can pass, a flow passage (28) in the area around said orifice and liquid coolant supply means (52) in communication with said passage for supplying coolant thereto characterized by said metallic member being comprised of copper and said flow passage (28) being a highly restrictive narrow flow passage and being in relatively close proximity to but isolated from said working surface whereby the velocity of the coolant will be accelerated to an ultra-high velocity of· at least 3 m/s (10 ft/s) across the surface of the passage walls as it passes through the passage.

3. The taphole (10) according to claim 2 characterized by said passage (28) being formed in said copper member (22).

4. The taphole (10) according to claim 3 characterized by said passage surrounding said orifice.

5. The taphole (10) according to claim 2 characterized by said passage (28) including a tunnel-like passageway formed in the copper member adjacent said orifice and including first and second openings (30, 32) in the outer wall of said member, the first opening (30) being an inlet for said coolant and the second (32) functioning as an outlet therefor.

6. The taphole (10) according to claim 5, characterized by said passage (28) including a plurality of said passageways, each including first and second openings (30, 32), all of said first openings being in communication with each other and all said second openings being in communication with each other.

7. The taphole (10) according to claim 7 characterized by said copper member including a substantially tubular portion (14).

8. The taphole (10) according to claim 7, characterized by a coolant guide (16) disposed coaxially around at least part of said tubular portion (14) and closely spaced therefrom thereby defining an annular space (38) therebetween forming part of said highly restrictive flow passage (28) and being in communication with said passageway through said second openings (32).

9. The taphole (10) according to claim 8, characterized by an outer tubular jacket (18) coaxially arranged around said coolant guide (16) and being spaced therefrom to provide a path (40) for said liquid coolant, said path being in communication with said passageways through said first openings (30).

10. A method for effectively cooling a taphole (10) including the step of directing liquid coolant across a surface (34) thereof behind the working surface (26) of said taphole characterized by said surface being comprised of copper and said liquid coolant being directed across said surface at an ultrahigh velocity of at least 3 m/s (10 ft/s) to sweep away steam generated upon said surface.

11. A trough (110) for delivering molten material (114) flowing from a furnace including an elongated upper member (118) having an upper surface (120) for supporting said material and a lower surface (124), a coolant guide (122) having a shape complementary to said upper member (118) and being spaced from the lower surface to define a flow passage (126) therebetween, and liquid coolant supply means (138) in communication with said passage (126) for supplying coolant thereto characterized by said upper member being comprised of copper and said coolant guide (122) being closely spaced from the lower surface (124) of said upper member to define a highly restrictive narrow flow passage (126) whereby the velocity of the coolant will be accelerated to an ultrahigh velocity of at least 3 m/s (10 ft/s) across the lower surface (124) of said member as it passes through the passage.

12. The trough (110) according to claim 11 characterized by a lower member (130) complementary to said coolant guide (122) and being spaced from the bottom thereof to provide a return path (128) for said liquid coolant, a plurality of transfer ports (136) adjacent one end of the trough providing communication from said passage (126) to said return path.

13. A method for effectively cooling a trough (110) comprising the step of directing liquid coolant across the lower surface (124) thereof characterized by said trough being comprised of copper and said liquid coolant being directed across said surface at an ultrahigh velocity of at least 3 m/s (10 ft/s) to sweep away steam generated upon said surface.

14. A fiberizing spinner (210) for converting a stream of molten material into a plurality of fibers including a substantially cylindrically shaped metal shell (212) having an outer surface (214) upon which the molten material impinges and including an inner cylindrical surface (216), a coolant guide (222) having an outer cylindrical surface (224) coaxially disposed within said shell and spaced from the inner surface thereof to form a flow passage (226), and liquid coolant supply means (234) in communication with the passage for supplying coolant thereto characterized by said shell being comprised of copper and the outer cylindrical surface (224) of said coolant guide being closely spaced from the inner surface (216) of said shell to define a highly restrictive narrow flow passage (226) whereby the velocity of the coolant will be accelerated to an ultrahigh velocity of at least 3 m/s (10 ft/s) across the inner cylindrical surface (216) of said shell as it passes through said passage.

15. The spinner (210) according to claim 14 characterized by said liquid coolant supply means (234) including a centrally disposed inner conduit (230) extending through an opening in the center of said coolant guide outwardly to the exterior of the spinner.

16. The spinner (210) according to claim 15 characterized by an outer conduit (236) coaxially arranged around said inner conduit (230) and being spaced therefrom to provide a return path (238) for said liquid coolant, a plurality of transfer ports (254) providing communication from said passage (226) to said return path.

17. A method for effectively cooling a spinner (210) comprising the step of directing liquid coolant across the inner surface (216) thereof characterized by said spinner being comprised of copper and by directing said liquid coolant across said surface at an ultrahigh velocity of at least 3 m/s (10 ft/s) to sweep away steam generated upon said surface.

## Patentansprüche

1. Vorrichtung (10, 110, 210), die bei einem Verfahren zum Umwandeln von schmelzflüssigem Material (114) in Mineralwollefasern benutzt wird, mit einer Arbeitsfläche (26, 120, 214), die mit dem schmelzflüssigen Material (114) in Berührung gebracht wird, mit einer Kühlmittelführung (16, 122, 222) mit Abstand von der Rückfläche (34, 124, 216) der Vorrichtung, um einen Kanal (28, 126, 226) zwischen der Führung und der Rückfläche zu bilden, und mit einer Versorgungseinrichtung (52, 138, 234) für flüssiges Kühlmittel, die mit dem Kanal in Verbindung steht, um ihn mit Kühlmittel zu versorgen, dadurch gekennzeichnet, daß die Arbeitsfläche aus Kupfer besteht und daß die Kühlmittelführung (16, 122, 222) in engem Abstand von der Rückfläche (34, 124, 216) der Vorrichtung angordnet ist, so daß ein äußerst beschränkter, schmaler Durchflußkanal (28, 126, 226) gebildet ist, wodurch die Geschwindigkeit des Kühlmittels auf eine ultrahohe Geschwindigkeit von wenigstens 3 m/s (10 Fuß/s) an der Oberfläche der Kanalwände beschleunigt wird, wenn es durch den Kanal hindurchgeht.

2. Stichloch (10) für einen Schmelzofen, mit einem metallischen Teil (22), das eine innere Arbeitsfläche (26) hat, welche eine Öffnung (24) bildet, durch die schmelzflüssiges Material aus dem Ofen hindurchgehen kann, mit einem Durchflußkanal (28) in dem Bereich um die Öffnung und mit einer Versorgungseinrichtung (52) für flüssiges Kühlmittel, die mit dem Kanal in Verbindung steht, um ihn mit Kühlmittel zu versorgen, dadurch gekennzeichnet, daß das metallische Teil aus Kupfer besteht und daß der Durchflußkanal (28) ein äußerst beschränkter, schmaler Durchflußkanal ist, der in relativ enger Nähe der Arbeitsfläche, aber isoliert von dieser angeordnet ist, wodurch die Geschwindigkeit des Kühlmittels auf eine ultrahohe Geschwindigkeit von wenigstens 3 m/s (10 Fuß/s) an der Oberfläche der Kanalwände beschleunigt wird, wenn es durch den Kanal hindurchgeht.

3. Stichloch (10) nach Anspruch 2, dadurch gekennzeichnet, daß der Kanal (28) in dem Kupferteil (22) gebildet ist.

7

4. Stichloch (10) nach Anspruch 3, dadurch gekennzeichnet, daß der Kanal die Öffnung umgibt.

5. Stichloch (10) nach Anspruch 2, dadurch gekennzeichnet, daß der Kanal (28) einen tunnelartigen Durchlaß aufweist, der in dem Kupferteil an der Öffnung gebildet ist und eine erste sowie eine zweite Öffnung (30, 32) in der äußeren Wand des Teils aufweist, wobei die erste Öffnung (30) ein Einlaß für das Kühlmittel ist und die zweite (32) einen Auslaß für dieses bildet.

6. Stichloch (10) nach Anspruch 5, dadurch gekennzeichnet, daß der Kanal (28) mehrere dieser Durchlässe aufweist, von denen jeder eine erste und eine zweite Öffnung (30, 32) hat, wobei sämtliche ersten Öffnungen miteinander und sämtliche zweiten Öffnungen miteinander in Verbindung stehen.

7. Stichloch (10) nach Anspruch 7, dadurch gekennzeichnet, daß das Kupferteil einen im wesentlichen rohrförmigen Teil (14) aufweist.

8. Stichloch (10) nach Anspruch 7, gekennzeichnet, durch eine Kühlmittelführung (16), die koaxial um wenigstens einen Teil des rohrförmigen Teils (14) und in engem Abstand von diesem angeordnet ist, wodurch ein Ringraum (38) zwischen ihnen gebildet ist, der Teil des äußerste beschränkten Durchflußkanals (28) ist und mit den Durchlässen über die zweiten Öffnungen (32) in Verbindung steht.

9. Stichloch (10) each Anspruch 8, gekennzeichnet durch einen äußeren rohrförmigen Mantel (18), der koaxial um die Kühlmittelführung (16) und mit Abstand von dieser angeordnet ist, um einen Weg (40) für das flüssige Kühlmittel zu bilden, welcher mit den Durchlässen über die ersten Öffnungen (30) in Verbindung steht.

10. Verfahren zum wirksamen Kühlen eines Stichloches (10), beinhaltend den Schritt, flüssiges Kühlmittel über eine Oberfläche (34) desselben hinter der Arbeitsfläche (26) des Stichloches zu leiten, dadurch gekennzeichnet, daß die Oberfläche aus Kupfer besteht und daß das flüssige Kühlmittel über die Oberfläche mit einer ultrahohen Geschwindigkeit von wenigstens 3 m/s (10 Fuß/s) hinweggeleitet wird, um auf der Oberfläche erzeugten Dampf wegzuleiten.

11. Wanne (110) zum Fördern schmelzflüssigen Materials (114), das aus einem Ofen fließt, mit einem langgestreckten oberen Teil (118), das eine obere Oberfläche (120) zum Aufnehmen des Materials und eine untere Oberfläche (124) hat, mit einer Kühlmittelführung (122), die eine zu dem oberen Teil (118) komplementäre Form hat und mit Abstand von der unteren Oberfläche angeordnet ist, so daß ein Durchflußkanal (26) zwischen ihnen gebildet ist, und mit einer Versorgungseinrichtung (138) für flüssiges Kühlmittel, die mit dem Kanal (126) in Verbindung steht, um diesen mit Kühlmittel zu versorgen, dadurch gekennzeichnet, daß das obere Teil aus Kupfer besteht und daß die Kühlmittelführung (122) in engem Abstand von der unteren Oberfläche (124) des oberen Teils angeordnet ist, um einen äußerst beschränkten, engen Durchflußkanal (126) zu bilden, wodurch die Geschwindigkeit des Kühlmittels auf eine ultrahohe Geschwindigkeit von wenigstens 3 m/s (10 Fuß/s) an der unteren Oberfläche (124) des Teils beschleunigt wird, wenn es durch den Kanal hindurchgeht.

12. Wanne (110) nach Anspruch 11, gekennzeichnet durch ein unteres Teil (130), das komplementär zu der Kühlmittelführung (122) und mit Abstand von dem unteren Ende derselben angeordnet ist, um einen Rückweg (128) für das flüssige Kühlmittel zu schaffen, wobei mehrere Übergangsöffnungen (136) an einem Ende der Wanne eine Verbindung von dem Kanal (126) zu dem Rückweg herstellen.

13. Verfahren zum wirksamen Kühlen einer Wanne (110), beinhaltend den Schritt, flüssiges Kühlmittel über die untere Oberfläche (124) derselben zu leiten, dadurch gekennzeichnet, daß die Wanne aus Kupfer besteht und daß das flüssige Kühlmittel über die Oberfläche mit einer ultrahohen Geschwindigkeit von wenigstens 3 m/s (10 Fuß/s) hinweggeleitet wird, um auf der Oberfläche erzeugten Dampf wegzuleiten.

14. Faserbildungsschleuderrad (210) zum Umwandeln eines Stroms schmelzflüssigen Materials in mehrere Fasern, mit einerm im wesentlichen zylindrisch geformten Metallmantel (212), der eine äußere Oberfläche (214) hat, auf die das schmelzflüssige Material auftrifft, und eine innere zylindrische Oberfläche (216), mit einer Kühlmittelführung (222), die eine äußere zylindrische Oberfläche (224) hat, die koaxial in dem Mantel und mit Abstand von der inneren Oberfläche desselben angeordnet ist, um einen Durchflußkanal (226) zu bilden, und mit einer Versorgungseinrichtung (234) für flüssiges Kühlmittel, die mit dem Kanal in Verbindung steht, um ihn mit Kühlmittel zu vorsorgen, dadurch gekennzeichnet, daß der Mantel aus Kupfer besteht und daß die äußere zylindrische Oberfläche (224) der Kühlmittelführung in eingem Abstand von der inneren Oberfläche (216) des Mantels angeordnet ist, um einen äußerst beschränkten, engen Durchflußkanal (226) zu bilden, wodurch die Geschwindigkeit des Kühlmittels auf eine ultrahohe Geschwindigkeit von wenigstens 3 m/s (10 Fuß/s) an der inneren zylindrischen Oberfläche (216) des Mantels beschleunigt wird, wenn es durch den Kanal hindurchgeht.

15. Schleuderrad (210) nach Anspruch 14, dadurch gekennzeichnet, daß die Versorgungseinrichtung (234) für flüssiges Kühlmittel eine zentral angeordnete innere Leitung (230) aufweist, die sich durch eine Öffnung ein der Mitte der Kühlmittelführung nach außen zur Außenseite des Schleuderrades erstreckt.

16. Schleuderrad (210) nach Anspruch 15, gekennzeichnet durch eine äußere Leistung (236), die koaxial um die innere Leitung (230) und mit Abstand von dieser angeordnet ist, um einen Rückweg (238) für das flüssige Kühlmittel zu bilden, wobei mehrere Übergangsöffnungen (254) eine Verbindung von dem Kanal (226) zu dem Rückweg herstellen.

17. Verfahren zum wirksamen Kühlen eines Schleuderrades (210), beinhaltend den Schritt, flüssiges Kühlmittel über die innrere Oberfläche (216) desselben zu leiten, dadurch gekennzeichnet, daß das Schleuderrad aus Kupfer besteht und daß das flüssige Kühlmittel über die Oberfläche mit einer ultrahohen

# 0 090 843

Geschwindigkeit von wenigstens 3 m/s (10 Fuß/s) geleitet wird, um auf der Oberfläche erzeugten Dampf wegzuleiten.

**Revendications**

1. Dispositif (10, 110, 210) utilisé dans un procédé pour la transformation d'un matière en fusion (114) en fibres de laine minérale, ce dispositif comprenant une surface de travail (26, 120, 214) avec laquelle la matière en fusion (114) entre en contact, un guide d'agent réfrigérant (16, 122, 222) espacé de la surface de repos (34, 124, 216) de ce dispositif en vue de définir un passage (28, 126, 226) entre ce guide et cette surface de repos, ainsi qu'un moyen d'alimentation d'agent réfrigérant liquide (52, 138, 234) communiquant avec le passage précité pour y acheminer l'agent réfrigérant, caractérisé en ce que la surface de travail est réalisée en cuivre et en ce que le guide d'agent réfrigérant (16, 122, 222) est espacé étroitement de la surface de repos (34, 124, 216) de ce dispositif, de façon à définir un passage d'écoulement étroit hautement restrictif (28, 126, 226) grâce auquel l'écoulement de l'agent réfrigérant est accéléré à une très grande vitesse d'au moins 3 m/seconde (10 pieds/seconde) en travers de la surface des parois du passage à mesure qu'il passe à travers ce dernier.

2. Trou de coulée (10) pour un four de fusion, comprenant un organe métallique (22) comportant une surface de travail intérieure (26) définissant un orifice (24) par lequel peut passer une matière en fusion provenant d'un four, un passage d'écoulement (28) ménagé dans la zone entourant l'orifice, ainsi qu'un moyen d'alimentation d'agent réfrigérant liquide (52) communiquant avec ce passage pour y acheminer l'agent réfrigérant, caractérisé en ce que l'organe métallique est réalisé en cuivre et en ce que le passage d'écoulement (28) est un passage d'écoulement étroit hautement restrictif qui est situé à proximité relativement immédiate de la surface de travail précitée, mais en en étant isolé, de telle sorte que l'écoulement de l'agent réfrigérant soit accéléré à une très grande vitesse d'au moins 3 m/seconde (10 pieds/seconde) en travers de la surface des parois du passage à mesure qu'il passe par ce dernier.

3. Trou de coulée (10) selon la revendication 2, caractérisé en ce que le passage (28) est défini dans l'organe en cuivre (22).

4. Trou de coulée (10) selon la revendication 3, caractérisé en ce que le passage précité entoure l'orifice.

5. Trou de coulée (10) selon la revendication 2, caractérisé en ce que le passage (28) est constitué d'un passage en forme de tunnel formé dans l'organe en cuivre à proximité de l'orifice et comportant une première et une seconde ouverture (30, 32) définies dans la paroi extérieure de cet organe, la première ouverture (30) étant une entrée pour l'agent réfrigérant, tandis que la seconde (32) fait office de sortie pour ce dernier.

6. Trou de coulée (10) selon la revendication 5, caractérisé en ce que le passage (28) est constitué de plusieurs passages comprenant chacun une première et une seconde ouverture (30, 32), les premières ouvertures communiquant toutes l'une avec l'autre, tandis que les secondes ouvertures communiquent également toutes l'une avec l'autre.

7. Trou de coulée (10) selon la revendication 7, caractérisé en ce que l'organe en cuivre comprend une partie pratiquement tubulaire (14).

8. Trou de coulée (10) selon la revendication 7, caractérisé par un guide d'agent réfrigérant (16) disposé coaxialement autour d'au moins un tronçon de la partie tubulaire (14) en en étant étroitement espacé, de façon à définir, entre eux, un espace annulaire (38) faisant partie du passage d'écoulement hautement restrictif (28) et communiquant avec les passages précités via les secondes ouvertures (32).

9. Trou de coulée (10) selon la revendication 8, caractérisé par une chemise tubulaire extérieure (18) disposée coaxialement autour du guide d'agent réfrigérant (16) en en étant espacée, de façon à définir un parcours (40) pour l'agent réfrigérant liquide, ce parcours communiquant avec les passages précités via les premières ouvertures (30).

10. Procédé en vue de refroidir efficacement un trou de coulée (10), ce procédé comprenant l'étape qui consiste à diriger un agent réfrigérant liquide en travers d'une surface (34) du trou de coulée qui est située derrière la surface de travail (26) de ce dernier, caractérisé en ce que cette surface est réalisée en cuivre et en ce que l'agent réfrigérant liquide est dirigé en travers de cette surface à une très grande vitesse d'au moins 3 m/seconde (10 pieds/seconde) afin de balayer la vapeur d'eau engendrée sur cette surface.

11. Chenal de coulée (110) destiné à distribuer une matière en fusion (114) s'écoulant d'un four, ce chenal de coulée comprenant un organe supérieur allongé (118) comportant une surface supérieure (120) destinée à supporter la matière et une surface inférieure (124), un guide d'agent réfrigérant (122) ayant une forme complémentaire à celle de l'organe supérieur (118) et qui est espacé de la surface inférieure pour définir un passage d'écoulement (126) entre eux, ainsi qu'un moyen d'alimentation d'agent réfrigérant liquide (138) communiquant avec le passage (126) pour y acheminer l'agent réfrigérant, caractérisé en ce que l'organe supérieur est réalisé en cuivre et en ce que le guide d'agent réfrigérant (122) est espacé étroitement de la surface inférieure (124) de l'organe supérieur afin de définir un passage d'écoulement étroit hautement restrictif (126) grâce auquel l'écoulement de l'agent réfrigérant est accéléré à une très grande vitesse d'au moins 3 m/seconde (10 pieds/seconde) en travers de la surface inférieure (124) de l'organe à mesure qu'il passe par ce passage.

12. Chenal de coulée (110) selon la revendication 11, caractérisé par un organe inférieur (130)

9

**0 090 843**

complémentaire du guide d'agent réfrigérant (122) et espacé de la base de ce dernier en vue de définir un parcours de retour (128) pour l'agent réfrigérant liquide, plusieurs orifices de transfert (136) étant situés à proximité d'une extrémité de chenal de coulée en vue d'établir une communication entre le passage (126) et la parcours de retour.

13. Procédé en vue de refroidir efficacement un chenal de coulée (110), ce procédé comprenant l'étape qui consiste à diriger un agent réfrigérant liquide en travers de la surface inférieure (124) du chenal de coulée, caractérisé en ce que le chenal de coulée est réalisé en cuivre et en ce que l'agent réfrigerant liquide est dirigé en travers de la surface précitée à une très grande vitesse d'au moins 3 m/seconde (10 pieds/seconde) afin de balayer la vapeur d'eau engendrée sur cette surface.

14. Appareil de filage de fibres (210) destiné à convertir un courant de matière en fusion en plusieurs fibres, cet appareil comprenant une enveloppe métallique de forme pratiquement cylindrique (212) comportant une surface extérieure (214) sur laquelle vient buter la matière en fusion, ainsi qu'une surface cylindrique intérieure (216), un guide d'agent réfrigérant (222) comportant une surface cylindrique extérieure (224) disposée coaxialement à l'intérieur de l'enveloppe et espacée de la surface intérieure de cette dernière en vue de former un passage d'écoulement (226), ainsi qu'un moyen d'alimentation d'agent réfrigérant liquide (234) communiquant avec ce passage en vue d'y acheminer l'agent réfrigérant, caractérisé en ce que l'enveloppe est réalisée en cuivre et en ce que la surface cylindrique extérieure (224) du guide d'agent réfrigérant est espacée étroitement de la surface intérieure (216) de l'enveloppe en vue de définir un passage d'écoulement étroit hautement restrictif (226) grâce auquel l'écoulement de l'agent réfrigérant est accéléré à une très grande vitesse d'au moins 3 m/seconde (10 pieds/seconde) en travers de la surface cylindrique intérieure (216) de l'enveloppe à mesure qu'il passe par ce passage.

15. Appareil de filage (210) selon la revendication 14, caractérisé en ce que le moyen d'alimentation d'agent réfrigérant liquide (234) comprend une conduite intérieure (230) occupant une position centrale et s'étendant vers l'extérieur à travers une ouverture ménagée au centre du guide d'agent réfrigérant, jusqu'à l'extérieur de l'appareil de filage.

16. Appareil de filage (210) selon la revendication 15, caractérisé par une conduite extérieure (236) disposée coaxialement autour de la conduite intérieure (230) et espacée de cette dernière en vue de définir un parcours de retour (238) pour l'agent réfrigérant liquide, plusieurs orifices de transfert (254) étant prévus pour établir une communication entre le passage (226) et le parcours de retour.

17. Procédé en vue de refroidir efficacement un appareil de filage (210), ce procédé comprenant l'étape qui consiste à diriger un agent réfrigérant liquide en travers de la surface intérieure (216) de l'appareil de filage, caractérisé en ce que cet appareil de filage est réalisé en cuivre et en ce que l'agent réfrigérant liquide est dirigé en travers de la surface précitée à une très grande vitesse d'au moins 3 m/seconde (10 pieds/seconde) afin de balayer la vapeur d'eau engendrée sur cette surface.

*Fig. 1*

0 090 843

*Fig. 2*

*Fig. 3*

2

Fig. 4

0 090 843